# FASCICULE DE BREVET EUROPEEN

(11) **EP 2 543 888 B1**
(45) Date de publication et mention de la délivrance du brevet: **12.08.2015**
(21) Numéro de dépôt: 12172810.9
(22) Date de dépôt: 20.06.2012
(51) Int. Cl.: F04D 19/00, F04D 27/00, F04D 29/70

(54) **Procédé de commande d'un moteur électrique agencé pour entrainer une turbine d'un moto-ventilateur**
Verfahren zur Steuerung eines elektrischen Motors für den Antrieb einer Turbine eines Kühlerventilators
Method for controlling an electric motor arranged to drive a turbine of an electric fan

(30) Priorité: 08.07.2011 FR 1156198
(43) Date de publication de la demande: 09.01.2013
(73) Titulaire: ALDES AERAULIQUE, 69200 Venissieux Cedex (FR)
(72) Inventeur: Boulanger, Xavier, 31460 Loubens Lauragais (FR); Saumade, Hervé, 12100 Creissels (FR)
(74) Mandataire: Verriest, Philippe

(56) Documents cités:
- EP-A1- 2 135 660
- DE-U1- 20 218 951
- FR-A1- 2 884 904

## Description

La présente invention concerne un procédé de commande d'un moteur électrique agencé pour entrainer en rotation une turbine d'un moto-ventilateur, ainsi qu'un moto-ventilateur mettant en oeuvre ce procédé.

L'invention concerne plus généralement le domaine de la ventilation mécanique contrôlée (VMC) d'un local technique ou d'habitation.

Un moto-ventilateur connu comporte une volute et une turbine logée dans ladite volute. La turbine est entrainée en rotation autour d'un axe, par un moteur électrique, à une vitesse de rotation basse lorsque l'air du local est peu vicié, et à une vitesse de rotation élevée lorsque l'air du local est plus vicié.

Au fil du temps, la turbine s'encrasse, entrainant une diminution du débit d'air insufflé ou extrait du local pour une consommation électrique donnée. En conséquence, afin de conserver un rendement du moto-ventilateur satisfaisant, il est recommandé de procéder régulièrement au désencrassement de la turbine.

Le désencrassement est généralement réalisé par un opérateur qui démonte la volute et retire la turbine pour la nettoyer. En outre, le moto-ventilateur étant souvent disposé dans des combles d'un bâtiment, l'accès au moto-ventilateur est rendu complexe.

L'opération de désencrassement est ainsi fastidieuse à mettre en oeuvre.

On connait par le document FR2884904 un procédé de commande d'un moteur électrique à vitesse variable agencé pour entrainer une turbine d'un moto-ventilateur en rotation à vitesse variable autour d'un axe. Ce procédé ne permet pas de remédier à l'inconvénient susmentionné.

On connait par le document DE20218951 un procédé de commande d'un moteur électrique agencé pour entrainer une turbine d'un moto-ventilateur en rotation autour d'un axe.

Ce procédé consiste à commander le moteur pour entrainer la turbine en rotation dans un premier sens de rotation.

En réponse à la détection d'un encrassement de l'appareil, le procédé consiste à commander le moteur pour entrainer la turbine en rotation dans un second sens de rotation, opposé au premier sens de rotation, pendant une durée prédéterminée, de manière à désencrasser la turbine.

Un inconvénient de ce procédé est qu'il est fréquent que l'encrassement de l'appareil soit détecté à un instant où l'air est fortement vicié dans le local d'habitation. La turbine est entrainée dans le second sens de rotation afin d'être désencrassée, et le débit d'air extrait du local est momentanément dégradé.

Cette dégradation du débit d'air extrait à un moment où l'air est fortement vicié dans le local engendre l'apparition d'un pic de pollution, ressenti par les occupants du local

L'invention vise à pallier cet inconvénient.

L'invention concerne ainsi un procédé de commande d'un moteur électrique agencé pour entrainer une turbine d'un moto-ventilateur en rotation autour d'un axe, notamment pour la ventilation d'un local technique ou d'habitation, consistant à :
a) commander le moteur pour entrainer la turbine en rotation autour de l'axe dans un premier sens de rotation à une vitesse de rotation basse ; et en alternance
b) commander le moteur pour entrainer la turbine en rotation autour de l'axe dans le premier sens de rotation à une vitesse de rotation élevée ;
   caractérisé en ce qu'en réponse à un passage de la vitesse de rotation élevée (Ve) à la vitesse de rotation basse (Vb), ou inversement,, le procédé consiste à :
c) commander le moteur pour entrainer la turbine en rotation autour de l'axe dans un second sens de rotation, opposé au premier sens de rotation, pendant une durée prédéterminée, de manière à désencrasser la turbine.

Le procédé de commande selon l'invention est avantageux en ce qu'il permet de limiter l'encrassement de la turbine, de façon automatique, sans démonter le moto-ventilateur. Ainsi, le temps entre deux opérations de désencrassement de la turbine par un opérateur est allongé.

L'étape a) est mise en oeuvre lorsque l'air au sein du local est peu vicié.

L'étape b) est mise en oeuvre lorsque l'air au sein du local est fortement vicié.

La mise en oeuvre de l'étape c) entraine une dégradation du débit d'air extrait par le moto-ventilateur. En mettant en oeuvre l'étape c) immédiatement après l'étape b), c'est-à-dire alors que l'air est peu vicié au sein du local, la dégradation du débit d'air extrait n'entraine pas l'apparition d'un pic de pollution, car on sort d'un cycle à fort débit d'air et le niveau de pollution a été réduit à la valeur la plus faible (un peu comme si on avait ouvert une fenêtre) et la légère augmentation du niveau de pollution ne l'amène pas encore au niveau général admissible lorsque que le ventilateur est à petite vitesse : les occupants ne ressentent absolument rien.

En mettant en oeuvre l'étape c) immédiatement avant l'étape b), c'est-à-dire alors qu'il y a une demande de dépollution de l'air, la dégradation du débit d'air extrait conforte l'augmentation de pollution qui a été ressentie. Toutefois, cette augmentation de pollution va immédiatement être compensée par le cycle à fort débit d'air correspondant à la demande de l'utilisateur. Les niveaux de pollution vont être rapidement réduits à des valeurs très faibles. L'inversion de sens de rotation a donc eu uniquement un effet de léger retard.

Au contraire, si l'étape c) était mise en oeuvre pendant l'étape b), c'est-à-dire alors que l'air est fortement vicié au sein du local, la dégradation momentanée du débit d'air extrait entrainerait l'apparition d'un pic de pollution élevé, qui serait ressenti par les occupants.

Ainsi, le fait que l'étape c) soit mise en oeuvre lors d'un passage de la vitesse de rotation élevée à la vitesse de rotation basse, ou inversement, permet de garantir en permanence un niveau de pollution en deçà d'un seuil prédéterminé.

Le procédé de commande selon l'invention peut également comporter une ou plusieurs des caractéristiques suivantes.

Avantageusement, l'étape c) est exécutée en réponse à chaque passage de la vitesse de rotation élevée à la vitesse de rotation basse, ou à chaque passage de la vitesse de rotation basse à la vitesse de rotation élevée. Dans sa forme d'exécution préférée, le procédé consiste à :
- mesurer une grandeur représentative de la vitesse de rotation de la turbine, telle que la puissance électrique consommée par le moteur électrique ; et
- détecter une variation de la grandeur mesurée, représentative d'un passage de la vitesse de rotation élevée à la vitesse de rotation basse, et inversement ; l'étape c) étant exécutée en réponse à la détection de cette variation.

Avantageusement pendant la durée prédéterminée la vitesse de rotation moyenne de la turbine est comprise entre 5 et 30 tours-s⁻¹.

De préférence, la durée prédéterminée est supérieure ou égale à 30 secondes.

Avantageusement, lors de l'étape c), l'accélération de la turbine présente au moins un pic dont l'amplitude est comprise entre 50 et 500 tours-s⁻².

L'invention concerne également un moto-ventilateur, notamment pour la ventilation d'un local technique ou d'habitation, comportant :
- une volute ;
- une turbine logée dans ladite volute, montée en rotation autour d'un axe ;
- un moteur électrique agencé pour entrainer en rotation ladite turbine autour son axe ; et
- une unité de commande adaptée pour :
   a) commander le moteur pour entrainer la turbine en rotation autour de l'axe dans un premier sens de rotation à une vitesse de rotation basse ; et en alternance
   b) commander le moteur pour entrainer la turbine en rotation autour de l'axe dans le premier sens de rotation à une vitesse de rotation élevée ;
      caractérisé en ce qu'en réponse à un passage de la vitesse de rotation élevée (Ve) à la vitesse de rotation basse (Vb), ou inversement, l'unité de commande est adaptée pour :
   c) commander le moteur pour entrainer la turbine en rotation autour de l'axe dans un second sens de rotation, opposé au premier sens de rotation, pendant une durée prédéterminée, de manière à désencrasser la turbine.

L'invention sera mieux comprise à la lecture de la description qui suit en référence au dessin schématique annexé représentant, à titre d'exemple non limitatif, une forme d'exécution d'un moto-ventilateur selon l'invention :
Figure 1 en est une représentation schématique en perspective ;
Figure 2 en est une représentation schématique en vue de dessus ;
figure 3 est un diagramme d'un procédé de commande d'un moteur du moto-ventilateur de figure 1 ;
figures 4 et 5 sont des chronogrammes représentant, respectivement, la vitesse de rotation et l'accélération d'une turbine du moto-ventilateur des figures 1 et 2 lors de l'exécution du procédé de figure 3.

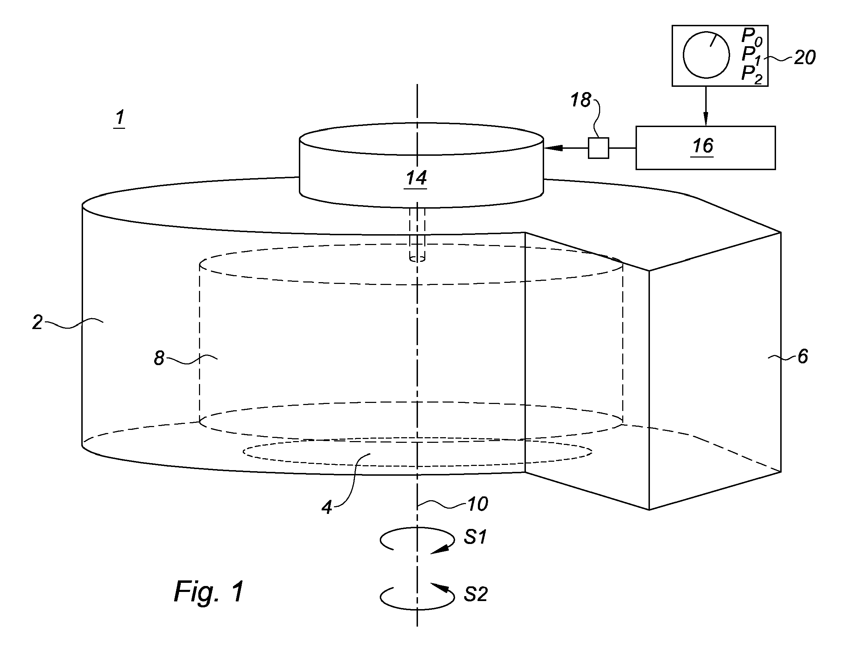

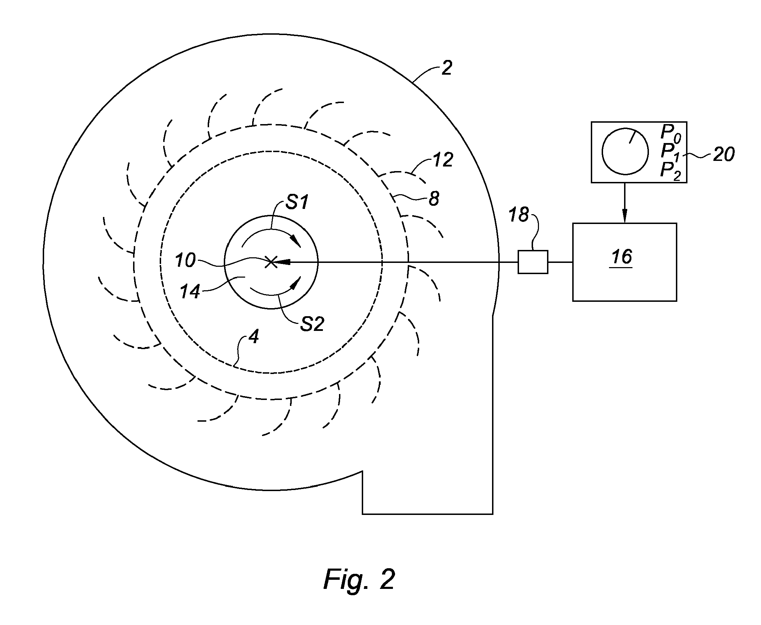

Les figures 1 et 2 représentent un moto-ventilateur 1 selon l'invention. Dans la forme d'exécution illustrée, le moto-ventilateur 1 est destiné à une installation de ventilation à simple flux.

Le moto-ventilateur 1 comporte une volute 2. Cette volute 2 présente une ouverture 4 agencée pour permettre une admission d'air vicié d'un local technique ou d'habitation, et une ouverture 6 agencée pour permettre le refoulement de cet air hors du local.

Le moto-ventilateur 1 comporte une turbine 8 logée dans la volute 2. La turbine 8 est montée en rotation autour d'un axe 10, d'une part dans un sens S1, et d'autre part dans un sens S2 opposé au sens S1.

La turbine 8 comprend une pluralité d'aubes 12 (représentées à la figure 2). Comme illustré, les aubes 12 sont courbées et agencées pour propulser l'air par leur face concave lorsque la turbine 8 tourne dans le sens S1.

Le moto-ventilateur 1 comporte un moteur 14 éléctrique agencé pour entrainer la turbine 8 en rotation autour de l'axe 10.

Le moto-ventilateur 1 comporte une unité 16 de commande du moteur 14. Par exemple, l'unité 16 est constituée d'un calculateur électronique apte à délivrer un courant ou une tension au moteur 14.

Le moto-ventilateur 1 comporte des moyens 18 de mesure de la puissance éléctrique consommée par le moteur 14. Ces moyens 18 comprennent par exemple un capteur de la tension et/ou du courant délivré par l'unité 16 au moteur 14.

Le moto-ventilateur 1 comporte enfin un bouton 20 électriquement raccordé à l'unité de commande 16. Ce bouton 20 présente une position d'arrêt P0, une première position de fonctionnement P1, et une seconde position de fonctionnement P2.

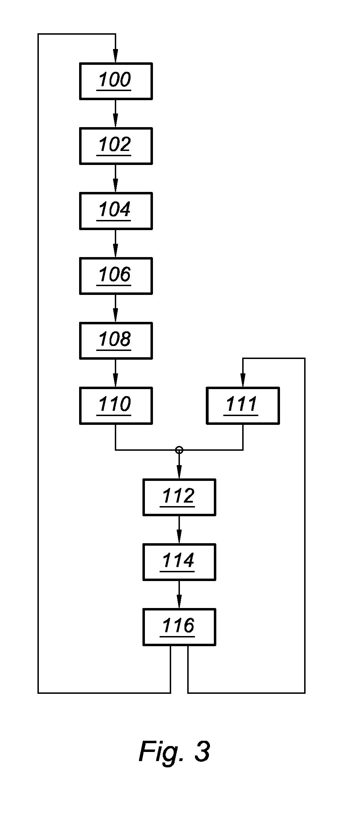

Un procédé de commande du moteur 14 va maintenant être décrit en référence aux figures 3, 4 et 5.

Initialement, le bouton 20 est en position d'arrêt P0. L'unité 16 commande le moteur 14 de sorte que la vitesse de rotation de la turbine 8 soit nulle.

Lors d'une étape 100, un utilisateur positionne le bouton 20 dans sa position P1.

En réponse, lors d'une étape 102 l'unité 16 commande le moteur 14 pour entrainer la turbine 8 en rotation autour de l'axe 10 dans le sens S1 à une vitesse de rotation basse Vb.

Le moto-ventilateur 1 fonctionne en régime normal.

Lors d'une étape 104, l'utilisateur positionne le bouton 20 dans sa position P2, suite à une émission de polluants dans le local.

En retour, lors d'une étape 106 l'unité 16 commande le moteur 14 pour entrainer la turbine 8 en rotation autour de l'axe 10 dans le sens S1 à une vitesse de rotation élevée Ve.

Le moto-ventilateur 1 fonctionne en régime accéléré.

Lors d'une étape 108, l'utilisateur repositionne le bouton 20 dans sa position P1, suite à l'arrêt de l'émission de polluants dans le local.

En retour, lors d'une étape 110 l'unité 16 commande le moteur 14 pour entrainer la turbine 8 en rotation autour de l'axe 10 dans le sens S1 à la vitesse de rotation basse Vb.

Parallèlement à l'exécution des étapes, 100, 102, 104, 106, 108 et 110 les moyens 18 mesurent la puissance électrique consommée par le moteur 14, lors d'une étape 111.

Lors d'une étape 112, les moyens 18 détectent une décroissance de la puissance consommée par le moteur 14, représentative d'un passage de la vitesse de rotation élevée Ve à la vitesse de rotation basse Vb.

En réponse, lors d'une étape 114 l'unité 16 commande le moteur 14 pour inverser subitement le sens de rotation de la turbine 8, et pour entrainer cette dernière en rotation autour de l'axe 10 dans le sens de rotation S2 pendant une durée prédéterminée, de préférence supérieure ou égale à 30 secondes, de manière à désencrasser ladite turbine.

L'inversion subite du sens de rotation de la turbine 8 se traduit par un pic 115 d'accélération de la turbine 8, dont l'amplitude est avantageusement comprise entre 50 et 500 tours-s⁻².

En outre, pendant la durée, la vitesse de rotation moyenne de la turbine 8 est de préférence comprise entre 5 et 30 tour-s⁻¹.

Lors d'une étape 116, l'unité 16 commande le moteur 14 pour inverser subitement le sens de rotation de la turbine 8 et pour entrainer cette dernière en rotation autour de l'axe 10 dans le sens de rotation S1 à la vitesse de rotation basse Vb.

De préférence, l'étape 114 est répétée à chaque répétition de l'étape 112, c'est-à-dire à chaque fois que les moyens 18 détectent une décroissance de la puissance consommée par le moteur 14, représentative d'un passage de la vitesse de rotation élevée Ve à la vitesse de rotation basse Vb.

L'invention ne se limite pas à la seule forme d'exécution du procédé décrite ci-avant à titre d'exemple, elle en embrasse au contraire toutes les variantes de réalisation.

En variante, à chaque répétition de l'étape 112, un compteur est incrémenté. L'étape 114 est alors exécutée lorsque ledit compteur dépasse ou égale un nombre N prédéterminé, où N est un nombre entier supérieur ou égal à1.

Il est également prévu que, lors de l'étape 114 l'unité 16 commande le moteur pour annuler la vitesse de rotation pendant une première durée prédéterminée, puis entrainer la turbine 8 en rotation autour de l'axe 10 dans le sens de rotation S2 pendant une seconde durée prédéterminée.

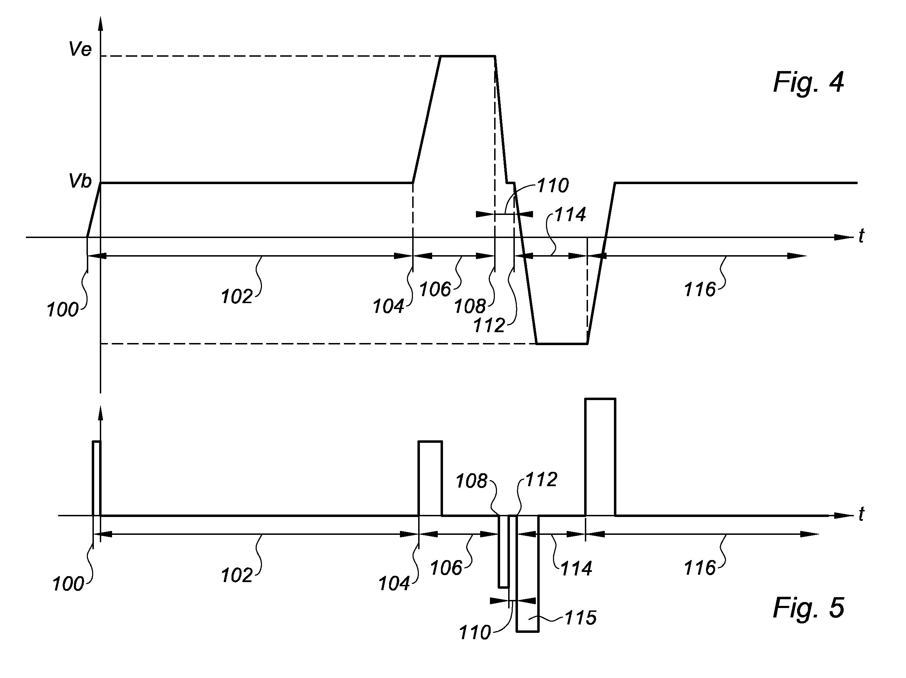

Lors de l'étape 114, la vitesse de rotation de la turbine ne prend pas nécessairement la forme d'un créneau rectangulaire, tel qu'illustré à la figure 4. Celle-ci peut présenter des variations.

Il est en outre prévu que, lors de l'étape 112 les moyens détectent non plus une décroissance de la puissance consommée par le moteur 14, représentative d'un passage de la vitesse de rotation élevée Ve à la vitesse de rotation basse Vb, mais une croissance de la puissance consommée par le moteur 14, représentative d'un passage de la vitesse de rotation basse Vb à la vitesse de rotation élevée Ve.

Le procédé de commande selon l'invention peut également être utilisé pour commander des moteurs électriques de moto-ventilateur destiné à une installation de ventilation à double flux. Dans ce cas, lesdits moteurs sont agencés pour entrainer des turbines disposées respectivement, sur des circuits d'air insufflé et d'air extrait. Les moteurs peuvent être commandés par la même unité de commande de manière à réaliser simultanément le désencrassement des turbines.

## Revendications

1. Procédé de commande d'un moteur électrique agencé pour entrainer une turbine (8) d'un moto-ventilateur (1) en rotation autour d'un axe (10), notamment pour la ventilation d'un local technique ou d'habitation, consistant à :
a) commander (102) le moteur (14) pour entrainer la turbine (8) en rotation autour de l'axe (10) dans un premier sens de rotation (S1) à une vitesse de rotation basse (Vb) ; et en alternance
b) commander (106) le moteur (14) pour entrainer la turbine (8) en rotation autour de l'axe (10) dans le premier sens de rotation (S1) à une vitesse de rotation élevée (Ve) ;
**caractérisé en ce qu'**en réponse à un passage de la vitesse de rotation élevée (Ve) à la vitesse de rotation basse (Vb), ou inversement,, le procédé consiste à :
c) commander (114) le moteur (14) pour entrainer la turbine (8) en rotation autour de l'axe (10) dans un second sens de rotation (S2), opposé au premier sens de rotation (S1), pendant une durée prédéterminée, de manière à désencrasser la turbine (8).

2. Procédé de commande selon la revendication 1, **caractérisé en ce que** l'étape c) est exécutée en réponse à chaque passage de la vitesse de rotation élevée (Ve) à la vitesse de rotation basse (Vb), ou à chaque passage de la vitesse de rotation basse (Vb) à la vitesse de rotation élevée (Ve).

3. Procédé de commande selon l'une quelconque des revendications 1 ou 2, **caractérisé en ce que** le procédé consiste à :
- mesurer (111) une grandeur représentative de la vitesse de rotation de la turbine, telle que la puissance électrique consommée par le moteur électrique (14) ; et
- détecter (112) une variation de la grandeur mesurée, représentative d'un passage de la vitesse de rotation élevée (Ve) à la vitesse de rotation basse (Vb), ou inversement ; l'étape c) étant exécutée en réponse à la détection de cette variation.

4. Procédé de commande selon l'une quelconque des revendications 1 à 3, **caractérisé en ce que**, pendant la durée prédéterminée la vitesse de rotation moyenne de la turbine est comprise entre 5 et 30 tours-s⁻¹.

5. Procédé de commande selon l'une quelconque des revendications 1 à 4, **caractérisé en ce que** la durée prédéterminée est supérieure ou égale à 30 secondes.

6. Procédé de commande selon l'une quelconque des revendications 1 à 5, caractérisé en ce lors de l'étape c), l'accélération de la turbine présente au moins un pic dont l'amplitude est comprise entre 50 et 500 tours-s⁻².

7. Moto-ventilateur (1), notamment pour la ventilation d'un local technique ou d'habitation, comportant :
- une volute (2) ;
- une turbine (8) logée dans ladite volute (2), montée en rotation autour d'un axe (10) ;
- un moteur électrique (14) agencé pour entrainer en rotation ladite turbine (8) autour son axe ; et
- une unité (16) de commande adaptée pour :
a) commander le moteur (14) pour entrainer la turbine (8) en rotation autour de l'axe (10) dans un premier sens de rotation (S1) à une vitesse de rotation basse (Vb) ; et en alternance
b) commander le moteur (14) pour entrainer la turbine en rotation autour de l'axe dans le premier sens de rotation à une vitesse de rotation élevée ;
**caractérisé en ce qu'**en réponse à un passage de la vitesse de rotation élevée (Ve) à la vitesse de rotation basse (Vb), ou inversement,, l'unité (16) de commande est adaptée pour :
c) commander le moteur (14) pour entrainer la turbine (8) en rotation autour de l'axe (10) dans un second sens de rotation (S2), opposé au premier sens de rotation (S1), pendant une durée prédéterminée, de manière à désencrasser la turbine (8).

## Patentansprüche

1. Steuerverfahren für einen Elektromotor, der angeordnet ist, um eine Turbine (8) eines Motorgebläses (1) um eine Achse (10) drehend anzutreiben, vor allem zur Lüftung eines technischen Raumes oder einer Wohnstätte, bestehend aus:
a) der Steuerung (102) des Motors (14) zum drehenden Antreiben der Turbine (8) um eine Achse (10) in eine erste Rotationsrichtung (S1) mit einer niedrigen Rotationsgeschwindigkeit (Vb); und abwechselnd
b) der Steuerung (106) des Motors (14) zum drehenden Antreiben der Turbine (8) um eine Achse (10) in eine erste Rotationsrichtung (S1) mit einer hohen Rotationsgeschwindigkeit (Ve);
**dadurch gekennzeichnet, dass** als Reaktion auf einen Übergang von der hohen Rotationsgeschwindigkeit (Ve) auf die niedrige Rotationsgeschwindigkeit (Vb) oder umgekehrt das Verfahren darin besteht:
c) den Motor (14) zu steuern (114), um die Turbine (8) während einer vorbestimmten Dauer drehend um eine Achse (10) in eine zweite Rotationsrichtung (S2) entgegengesetzt zur ersten Rotationsrichtung (S1) anzutreiben, um die Turbine (8) zu reinigen.

2. Steuerverfahren nach Anspruch 1, **dadurch gekennzeichnet, dass** der Schritt c) als Reaktion auf jeden Übergang von der hohen Rotationsgeschwindigkeit (Ve) auf die niedrige Rotationsgeschwindigkeit (Vb) oder auf jeden Übergang von der niedrigen Rotationsgeschwindigkeit (Vb) auf die hohe Rotationsgeschwindigkeit (Ve) ausgeführt wird.

3. Steuerverfahren nach irgendeinem der Ansprüche 1 oder 2, **dadurch gekennzeichnet, dass** das Verfahren darin besteht:
- eine repräsentative Größe für die Rotationsgeschwindigkeit der Turbine, wie die elektrische Leistung, zu messen (111), die vom Elektromotor (14) aufgenommen wird; und
- eine Variation der gemessenen Größe zu erkennen (112), die repräsentativ für den Übergang von der hohen Rotationsgeschwindigkeit (Ve) auf die niedrige Rotationsgeschwindigkeit (Vb) oder umgekehrt ist; wobei der Schritt c) als Reaktion auf die Erkennung dieser Variation ausgeführt wird.

4. Steuerverfahren nach irgendeinem der Ansprüche 1 bis 3, **dadurch gekennzeichnet, dass** die durchschnittliche Rotationsgeschwindigkeit der Turbine während der vorbestimmten Dauer zwischen 5 und 30 Umdrehungen/Sekunde liegt.

5. Steuerverfahren nach irgendeinem der Ansprüche 1 bis 4, **dadurch gekennzeichnet, dass** die vorbestimmte Dauer größer oder gleich 30 Sekunden ist.

6. Steuerverfahren nach irgendeinem der Ansprüche 1 bis 5, **dadurch gekennzeichnet, dass** die Beschleunigung der Turbine beim Schritt c) zumindest eine Spitze aufweist, deren Amplitude zwischen 50 und 500 Umdrehungen/Sekunde liegt.

7. Motorgebläse (1), vor allem zur Lüftung eines technischen Raumes oder einer Wohnstätte, folgendes umfassend:
- eine Volute (2);
- eine Turbine (8), die in der besagten Volute (2) angebracht, und um eine Achse (10) drehend montiert ist;
- einen Elektromotor (14), der angeordnet ist, um die besagte Turbine (8) drehend um ihre Achse anzutreiben; und
- eine Steuereinheit (16), die sich dazu eignet, um:
a) den Motor (14) zu steuern, um die Turbine (8) drehend um die Achse (10) in eine erste Rotationsrichtung (S1) mit einer niedrigen Rotationsgeschwindigkeit (Vb) anzutreiben; und abwechselnd
b) den Motor (14) zu steuern, um die Turbine drehend um eine Achse in eine erste Rotationsrichtung mit einer hohen Rotationsgeschwindigkeit anzutreiben;
**dadurch gekennzeichnet, dass** sich die Steuereinheit (16) als Reaktion auf einen Übergang von der hohen Rotationsgeschwindigkeit (Ve) auf die niedrige Rotationsgeschwindigkeit (Vb) oder umgekehrt dazu eignet, um:
c) den Motor (14) zu steuern, um die Turbine (8) während einer vorbestimmten Dauer drehend um eine Achse (10) in eine zweite Rotationsrichtung (S2) entgegengesetzt zur ersten Rotationsrichtung (S1) anzutreiben, um die Turbine (8) zu reinigen.

## Claims

1. A method for controlling an electric motor arranged for driving a turbine (8) of an electric fan (1) in rotation around an axis (10), in particular for ventilating technical or residential premises, consisting in:
a) controlling (102) the motor (14) for driving the turbine (8) in rotation around the axis (10) in a first direction of rotation (S1) at a low rotational speed (Vb); and in alternation
b) controlling (106) the motor (14) for driving the turbine (8) in rotation around the axis (10) in the first direction of rotation (S1) at a high rotational speed (Ve);
**characterized in that** in response to a transition from the high rotational speed (Ve) to the low rotational speed (Vb), or conversely, the method consists in:
c) controlling (114) the motor (14) for driving the turbine (8) in rotation around the axis (10) in a second direction of rotation (S2), opposed to the first direction of rotation (S1), for a predetermined period, in such a manner as to unclog the turbine (8).

2. The controlling method according to claim 1, **characterized in that** the step c) is carried out in response to each transition from the high rotational speed (Ve) to the low rotational speed (Vb), or with each transition from the low rotational speed (Vb) to the high rotational speed (Ve).

3. The controlling method according to any one of claims 1 or 2, **characterized in that** the method consists in:
- measuring (111) a magnitude representing the rotational speed of the turbine such as the electric power consumed by the electric motor (14); and
- detecting (112) a variation of the measured magnitude, representing a transition from the high rotational speed (Ve) to the low rotational speed (Vb), or conversely; the step c) being carried out in response to the detection of this variation.

4. The controlling method according to any one of claims 1 to 3, **characterized in that**, for the predetermined period the average rotational speed of the turbine is between 5 and 30 rev-s⁻¹.

5. The controlling method according to any one of claims 1 to 4, **characterized in that** the predetermined period is greater than or equal to 30 seconds.

6. The controlling method according to any one of claims 1 to 5, **characterized in that** during step c), the acceleration of the turbine shows at least one peak the amplitude of which is between 50 and 500 rev-s⁻².

7. An electric fan (1), in particular for ventilating technical or residential premises, including:
- a volute (2);
- a turbine (8) housed in said volute (2), mounted in rotation around an axis (10);
- an electric motor (14) arranged for driving in rotation said turbine (8) around the axis thereof; and
- a controlling unit (16) suitable for:
a) controlling the motor (14) for driving the turbine (8) in rotation around the axis (10) in a first direction of rotation (S1) at a low rotational speed (Vb); and in alternation
b) controlling the motor (14) for driving the turbine in rotation around the axis in the first direction of rotation at a high rotational speed;
**characterized in that** in response to a transition from the high rotational speed (Ve) to the low rotational speed (Vb), or conversely, the controlling unit (16) is suitable for:
c) controlling the motor (14) for driving the turbine (8) in rotation around the axis (10) in a second direction of rotation (S2), opposed to the first direction of rotation (S1), for a predetermined period, in such a manner as to unclog the turbine (8).
